# EUROPEAN PATENT SPECIFICATION

(11) **EP 2 657 723 B1**
(45) Date of publication and mention of the grant of the patent: **12.11.2014**
(21) Application number: 12165806.6
(22) Date of filing: 26.04.2012
(51) Int. Cl.: G01V 1/22, G01V 1/38, H04B 11/00

(54) **Wireless subsea seismic sensor and data collection methods**
Drahtloser Unterwasser-Erdbebensensor und Datensammelverfahren
Capteur sismique sous-marin sans fil et procédés de collecte de données

(43) Date of publication of application: 30.10.2013
(73) Proprietor: Vetco Gray Controls Limited, Bristol BS48 1BS (GB)
(72) Inventor: Vangasse, Anthony, Nailsea, Bristol BS48 1BS (GB); Phillips, Raymond, Nailsea, Bristol BS48 1BS (GB); Arnison, Dean, Nailsea, Bristol BS48 1BS (GB)
(74) Representative: Emerson, Peter James

(56) References cited:
- GB-A- 2 424 954
- US-A1- 2003 117 893
- US-A1- 2008 144 442

## Description

### Field of the Invention

This invention relates to seismic sensors and their method of operation and, in particular, to subsea seismic sensors for subsea deployment in arrays on the sea bed and their operation using wireless communications.

### Background to the Invention

Seismic surveys are carried out to search for and manage reserves of oil and gas in underground rock formations. Such surveys utilize the reflection or refraction of seismic waves by geologic layers and rock/soil in order to characterize the subsurface geological conditions and structures that may contain hydrocarbons. When rock formations to be surveyed are under the sea, arrays of sensors may be typically deployed on the sea surface, for example, by being towed behind a survey vessel. However, a floating array of sensors can only detect longitudinal or pressure waves (p-waves), because transverse, or shear waves (s-waves) produced from a controlled seismic source of energy do not travel through water. More information can be gained, and seismic surveys can be more effective, when seismic sensors are located on the seabed. By locating the seismic sensors, such as geophones and hydrophones, and the seismic energy source on the solid seabed, both pressure and shear waves may be introduced directly into the solid seabed and both s-waves and p-waves may be received at the seismic sensors. More detailed Interpretation of the seismic record can then be undertaken to reveal possible hydrocarbon-bearing formations.

Conventionally, seismic sensors are strung into arrays, with sensors wired at fixed intervals. Accurately placing strings of seismic sensors in an array on the seabed is difficult and time consuming. The seabed is not always level and so corrections have to be made when sensors cannot be evenly spaced. The cabling, carrying power and communications between the sensors, constitutes a large capital cost. Electrical wiring also degrades in a subsea environment.

As prior art there may be mentioned US 2008/0144442, which discloses a method of subsea seismic sensor data collection having the pre-characterising features of claim 1.

### Summary of the Invention

The present invention is directed at providing a method of collecting data from an array of subsea seismic sensors, each subsea seismic sensor comprising:
at least one transducer responsive to physical changes following a seismic event;
means for recording data from the or each transducer; and
a transceiver for wirelessly transmitting the recorded data from the sensor to a remote data collection device in response to a control signal received from an external source,
each sensor being adapted to communicate selectively and wirelessly with one or more adjacent similar sensors, and adapted to determine its position relative to one or more adjacent similar sensors, or the position of another similar sensor relative to it, using wireless communication between the said sensors,
characterised in that the method comprises:
wirelessly sending a polling signal from the remote data collection device;
receiving one or more responses from adjacent sensors in the array;
selectively designating a one of the responsive sensors as a first sensor in a communication chain of sensors, said one responsive sensor then sending a polling signal and receiving responses from one or more previously undesignated sensors and selectively designating a one of the previously undesignated responsive sensors as the next sensor in the communication chain and the next sensor repeating the polling and selective designation for a subsequent next sensor in the communication chain and the process repeating until the communication chain has a desired number of sensors or until no sensors remain undesignated;
sending a data collection signal from the data collection device to the first designated sensor to commence data collection;
propagating the data collection signal along the communication chain from the first to the last designated sensor in the chain; and
commencing data transmission from the last designated sensor back up the chain of sensors, each next last designated sensor in the chain successively adding its data to the data received from each previous sensor in the chain, the first designated sensor in the chain finally transmitting the accumulated data from all the sensors in the chain on to the data collection device.

Each sensor may be individually powered. Adopting wireless communications and using a local battery or power source for each sensor or group of sensors, removes the need for cables to connect the sensors in a fixed array. This substantially reduces the cost of communication with the seismic sensors by elimination of the costly wiring between the sensors. Furthermore, the invention allows flexibility of location of the seismic sensors, yet still provides for accurate determination of their position.

The relative positions of individual sensors may be conveniently, and accurately, determined after deployment, using the triangulation of wireless location signals between three or more sensors. It is not necessary to fix the sensors in predetermined relationships to each other as with a wired array. Individual sensors may be more quickly and conveniently placed (and replaced) on the seabed without worrying about their precise positions. Ease of replacement of individual sensors without the necessity for precise initial relocation is also helpful in situations where an array is left in place for an extended period, such as for 4D or time-lapse seismic monitoring of reservoirs in production. The sensors may also include a transducer for determining the depth below the sea level at which the sensor is located on the seabed when in use.

The seismic sensors may comprise 3 or 4 component (3C or 4C) sensors comprising 3 orthogonal geophones with a hydrophone, which are powered either by battery, per sensor, or as a group of sensors connected to a local battery, or alternative subsea power source.

Using wireless communications and independently operable sensors also facilitates alternative methods of data collection from arrays of such sensors.

The remote data collection device may be a mobile unit installed in a remotely operated vehicle (ROV) or in an autonomous underwater vehicle (AUV), which can be deployed to retrieve data from an array (or several arrays) when necessary, thereby saving on costs of installing a fixed data collection device for every array.

The method according to the invention may also conveniently include the step of determining the position of said at least one sensor relative to two or more other sensors in the array by triangulation using wireless signal transmission between the sensors; and transmitting the determined positional data to the remote data collection device.

### Brief Description of the Drawings

Fig. 1 is a block diagram of a seismic sensor;
Fig. 2 illustrates an array of seismic sensors adapted to communicate individually with a mobile data collection device;
Fig. 3 illustrates a similar array of seismic sensors adapted to communicate individually with a fixed remote data collection device comprising a separate seabed transceiver unit, for onward transmission to a mobile data collection device; and
Fig. 4 illustrates a method of collecting data from an array of seismic sensors according to an embodiment of the present invention, wherein each sensor is adapted to communicate sensor by sensor to accumulate data from the array for ultimate onward transmission of the accumulated data via a seabed transceiver unit.

### Detailed Description of the Invention

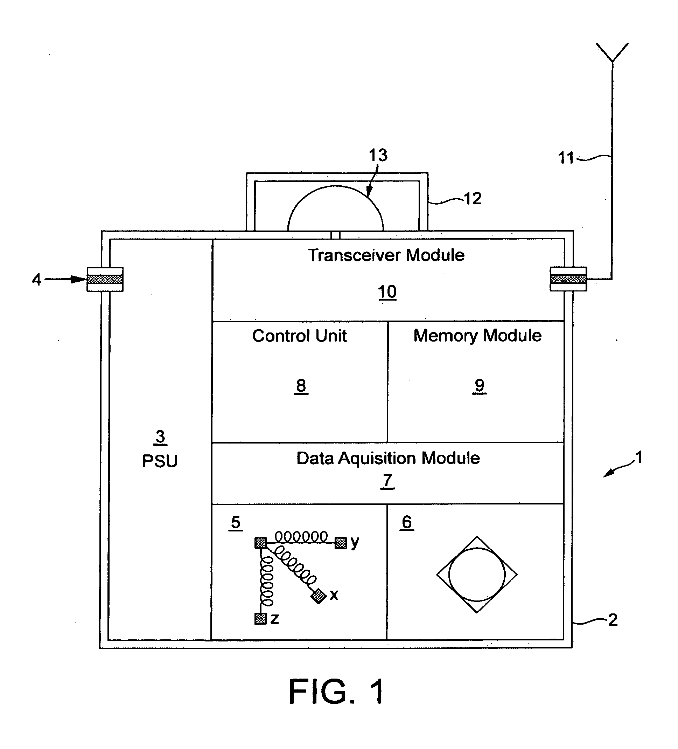

Fig. 1 is a block diagram of a seismic sensor 1. The sensor 1 comprises a waterproof and pressure-resistant housing 2 enclosing the sensor's electronic modules. A power supply unit (PSU) 3 is provided with rechargeable batteries to supply power to the modules. The PSU may be connected to an external power supply, which can also be used to recharge the internal batteries, via a connector 4. The sensor includes a 3-component geophone 5 to respond to 3-dimensional physical displacement of the sensor and a hydrophone 6 to respond to water pressure variations. In operation, signals from the geophone 5 and hydrophone 6 are passed to the data acquisition module 7. A control unit 8 manages the data acquisition and storage of the data in a memory module 9. The control unit 8 also manages the receipt and transmission of control signals and data to and from external sources via a transceiver module 10 and an antenna 11. The sensor is provided with its own individual electronic identifier (ID) so that signals can be selectively sent to and from each sensor. The sensor 1 is also provided with a handle 12 for mechanical recovery and an automated retrieval mechanism 13 incorporating an electronically operable compressed air cartridge adapted to inflate a balloon to lift the sensor to the sea surface.

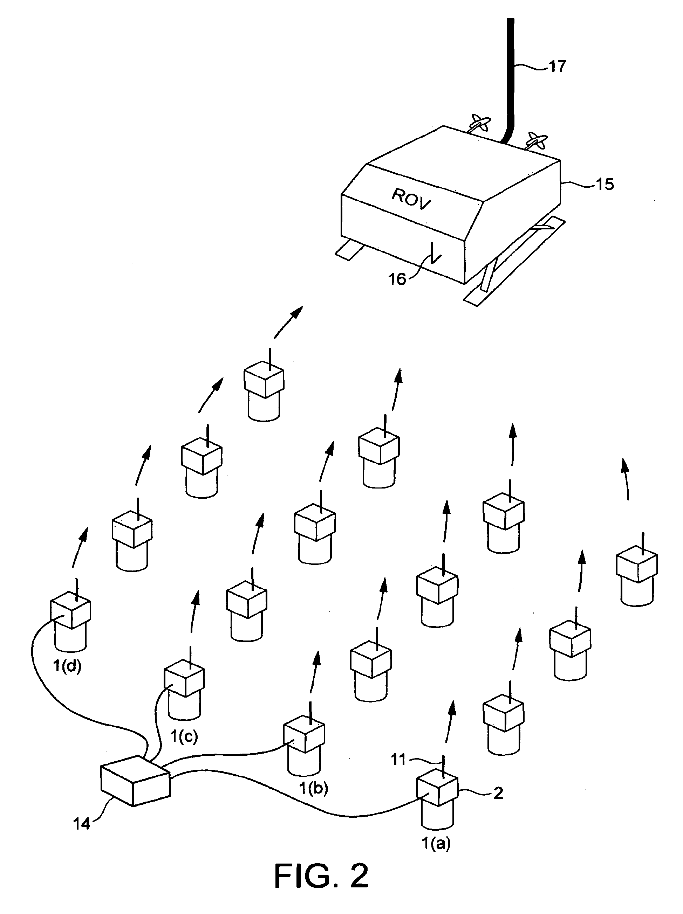

Fig. 2 shows an array of sixteen sensors 1 deployed on the seabed and illustrates a method of data collection, which may be employed using these sensors. Four of the sensors 1 (a), (b), (c) and (d) are shown connected to an auxiliary power supply 14. The remaining sensors are all powered individually by their internal PSUs.

In this example, data is collected from the sensors individually by a remotely operated vehicle (ROV) 15, which is controlled, and communicates with the surface, via an umbilical cable 17. The ROV 5 sends control signals via its antenna 16 to interrogate the sensors. In this embodiment, each sensor 1 is individually interrogated and each transmits its data sequentially to the ROV 15. Alternatively, each sensor may be adjusted to transmit on a slightly different frequency so that the data from different sensors can be collected simultaneously on different frequencies.

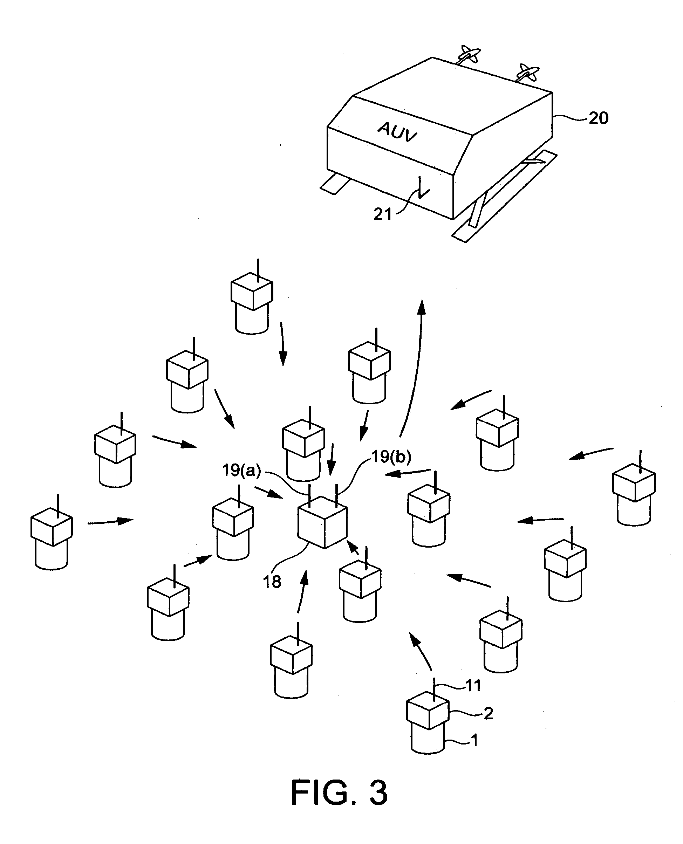

Fig. 3 shows a similar array of sensors 1 set up to use an alternative method of data collection via a local data hub unit 18. In this case, the hub unit 18 is centrally located to collect data from all the sensors 1 in the array. Data is received from each sensor 1 via its antenna 19(a). The accumulated data is then stored until an autonomous underwater vehicle (AUV) 20 is deployed to collect the data. The AUV 20 is pre-programmed to pass over the array and communicates wirelessly with the hub unit 18, which is instructed to transmit the accumulated data via an antenna 19(b) on the hub unit 18 to an antenna 21 on the AUV 20. As the AUV 20 is not directly connected to the surface via any umbilical connections, the AUV 20 then itself stores the data collected from the hub unit 18 (and can do likewise for multiple arrays and associated other hub units) before returning to the surface when the accumulated data can be downloaded for processing in the normal way.

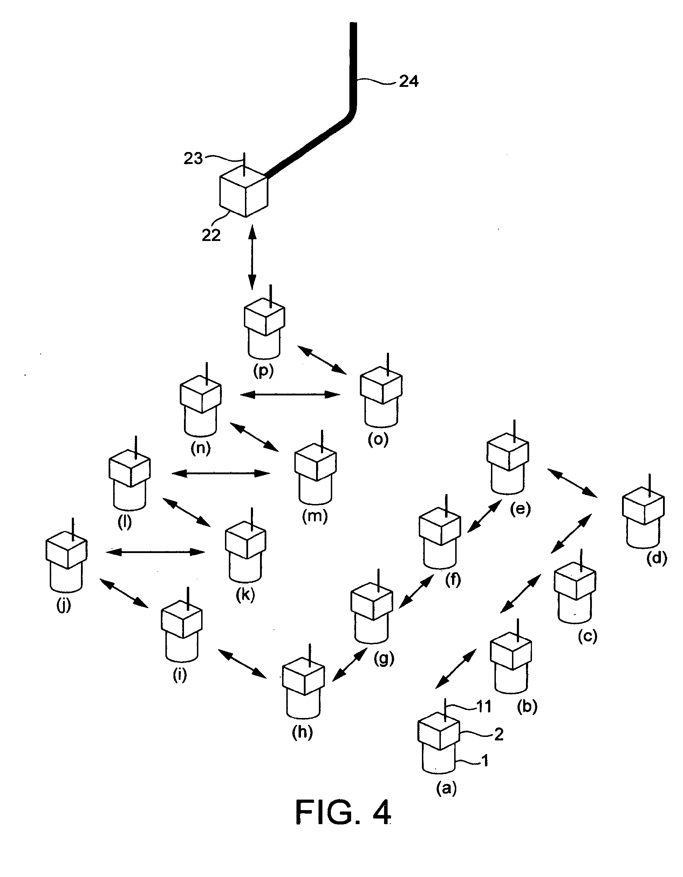

Fig. 4 shows another similar array of sensors 1 set up to use a method of data collection according to an embodiment of the invention, via a subsea base unit 22 which, in this example, is itself connected to, and controlled from, the surface via an umbilical cable 24.

In this embodiment, the base unit 22 is programmed to poll and communicate wirelessly via an antenna 23 with one or more of the sensors in the array. Each sensor 1 is similarly adapted to poll and communicate with one or more adjacent sensors in order to set up a "daisy chain" communication channel using all active sensors in the array (i.e. 1(p) to 1(a) and back).

To set up a suitable channel, the base unit 22 first polls nearby sensors and, on the basis of acquired signal strength, or other appropriate parameter, selects and designates one sensor (typically the nearest- 1(p) in the example shown) to start the chain. The first designated sensor then itself polls adjacent sensors and designates a next nearest 1 (o). The process continues, with each successively designated sensor further designating the next previously undesignated sensor until all active sensors in the array are designated in turn and the chain is completed. In cases where an array comprises spurs or multiple diverging lines of sensors, then one or more of the sensors may act as an interim node, communicating to and from multiple chains of sensors in order to complete the communication channels to and from the base unit to all the active sensors. Similarly, if a sensor in the chain fails, the adjacent sensors can be programmed to re-route the chain automatically. In this embodiment, when the base unit 22 wishes to initiate data collection from the array, it sends an appropriate trigger command, which is relayed down the chain to the most remote sensor (i.e. to 1(a) in the example). This sensor then responds by transmitting its data to the next sensor 1 (b) in the chain, which adds on its data and then transmits the combined data on to the next sensor, and so on until the final sensor 1(p) in the chain transmits the accumulated data for all the active sensors in the array on to the base unit 22.

The use of an interactive, intelligent daisy-chaining of the sensors in the array can overcome problems of communication distance limitations under water, where signals can be subject to rapid attenuation over relatively short distances. This also means sensor transmitters can operate at lower power and for longer periods without needing to recharge batteries, for example.

It will be apparent that various aspects of the methods of data collection illustrated in the examples of Figs. 2, 3 and 4 may be interchanged or combined in large scale arrays, for example.

In each of the options above, the wireless communication can be through either electromagnetic radio frequency, acoustic or optical means, and the sensors and transmitters may be powered by alternative local sources of electricity such as water current turbines, temperature differential thermocouples, nuclear isotope electrical generators, etc.

Each sensor can be strategically placed relative to other sensors for an effective array. Alternatively, a first sensor or base unit could be placed accurately and the remaining sensors distributed with less accurate initial positioning. Triangulation of signals between sensors (not co-linear) can then be used to locate the sensors relative to each other. The distance to any particular sensor may be determined by measuring the relative time delays in the signal from the sensor to three different sensors close to it. Using individually selectable, wireless seismic sensors according to the invention, a decision can be made as to which of the many sensors in an array is to take part in any particular survey, and to define which of the seismic data sources is selected to produce a particular seismic image. Using data from a subset of the total array can effectively allow an analyst to 'view' a reservoir from one particular perspective. Similar views can be constructed using different subsets of the total array to get seismic profiles from different angles. These separate 'views' may then be combined to improve the resolution of the overall reservoir image.

## Claims

1. A method of collecting data from an array of subsea seismic sensors (1), each subsea seismic sensor comprising:
at least one transducer (5 or 6) responsive to physical changes following a seismic event;
means (9) for recording data from the or each transducer; and
a transceiver (10) for wirelessly transmitting the recorded data from the sensor to a remote data collection device (15) in response to a control signal received from an external source, each sensor being adapted to communicate selectively and wirelessly with one or more adjacent similar sensors, and adapted to determine its position relative to one or more adjacent similar sensors, or the position of another similar sensor relative to it, using wireless communication between the said sensors,
**characterised in that** the method comprises:
wirelessly sending a polling signal from the remote data collection device;
receiving one or more responses from adjacent sensors in the array;
selectively designating a one of the responsive sensors as a first sensor in a communication chain of sensors, said one responsive sensor then sending a polling signal and receiving responses from one or more previously undesignated sensors and selectively designating a one of the previously undesignated responsive sensors as the next sensor in the communication chain and the next sensor repeating the polling and selective designation for a subsequent next sensor in the communication chain and the process repeating until the communication chain has a desired number of sensors or until no sensors remain undesignated;
sending a data collection signal from the data collection device to the first designated sensor to commence data collection;
propagating the data collection signal along the communication chain from the first to the last designated sensor in the chain; and
commencing data transmission from the last designated sensor back up the chain of sensors, each next last designated sensor in the chain successively adding its data to the data received from each previous sensor in the chain, the first designated sensor in the chain finally transmitting the accumulated data from all the sensors in the chain on to the data collection device.

2. A method of collecting data according to claim1, wherein each sensor is adapted to receive and accumulate data from one or more other similar sensors with its own data and to retransmit said accumulated data on to another similar sensor or remote data collection device.

3. A method of collecting data according to claim 1 or 2, wherein each sensor is adapted to adjust the operating frequency of the transceiver transmissions according to need.

4. A method of collecting data according to any preceding claim, wherein the at least one transducer comprises a geophone (5).

5. A method of collecting data according to any preceding claim, wherein the at least one or a further transducer comprises a hydrophone (6).

6. A method of collecting data according to any preceding claim, wherein each sensor includes a self-contained power supply (3).

7. A method of collecting data according to claim 6, wherein the self-contained power supply incorporates a rechargeable battery and means for recharging the battery in situ.

8. A method of collecting data according to any preceding claim, wherein the transceiver communicates wirelessly using at least one of radio frequency, optical frequency and acoustic signals.

9. A method of collecting data according to any preceding claim, wherein the remote data collection device is mobilised in an ROV or AUV.

10. A method of collecting data according to any preceding claim including, for at least one sensors in the array, the steps of
determining the position of said at least one sensor relative to two or more other sensors in the array by triangulation using wireless signal transmission between the sensors; and
transmitting the determined positional data to the remote data collection device.

11. A method of collecting data according to any preceding claim including the steps of selectively collecting the data relating to a particular seismic event from a subset of the total number of sensors in the array.

## Patentansprüche

1. Verfahren zum Sammeln von Daten von einer Anordnung unterseeischer seismischer Sensoren (1), wobei jeder unterseeische seismische Sensor umfasst:
wenigstens einen Wandler (5 oder 6), der auf einem seismischen Ereignis folgende physikalische Änderungen anspricht;
Mittel (9) zum Aufzeichnen von Daten von dem oder jedem Wandler; und
einen Transceiver (10) zum drahtlosen Übertragen der aufgezeichneten Daten von dem Sensor zu einer entfernten Datensammelvorrichtung (15) als Reaktion auf ein von einer externen Quelle empfangenes Steuersignal,
wobei jeder Sensor so ausgelegt ist, dass er selektiv und drahtlos mit einem oder mehreren benachbarten ähnlichen Sensor(en) kommuniziert, und so ausgelegt ist, dass er unter Verwendung drahtloser Kommunikation zwischen den Sensoren seine Position gegenüber einem oder mehreren benachbarten ähnlichen Sensor(en) oder die Position eines anderen ähnlichen Sensors ihm gegenüber bestimmt,
**dadurch gekennzeichnet, dass** das Verfahren umfasst:
drahtloses Senden eines Abfragesignals von der entfernten Datensammelvorrichtung;
Empfangen einer oder mehrerer Antwort(en) von benachbarten Sensoren der Anordnung;
selektives Bezeichnen eines der antwortenden Sensoren als ersten Sensor einer Kommunikationskette von Sensoren, wobei der eine antwortende Sensor dann ein Abfragesignal sendet und Antworten von einem oder mehreren zuvor nicht näher bezeichneten Sensor(en) empfängt und selektiv einen der zuvor nicht näher bezeichneten antwortenden Sensoren als nächsten Sensor der Kommunikationskette bezeichnet und der nächste Sensor die Abfrage und selektive Bezeichnung für einen nachfolgenden nächsten Sensor der Kommunikationskette wiederholt und sich der Vorgang wiederholt, bis die Kommunikationskette eine gewünschte Anzahl von Sensoren aufweist oder bis keine nicht näher bezeichneten Sensoren verbleiben,
Senden eines Datensammelsignals von der Datensammelvorrichtung an den ersten näher bezeichneten Sensor, um die Datensammlung zu beginnen;
Weiterleiten des Datensammelsignals entlang der Kommunikationskette vom ersten bis zum letzten näher bezeichneten Sensor der Kette; und
Beginnen der Datenübertragung beim letzten näher bezeichneten Sensor und die Kette von Sensoren zurückverfolgend, wobei der jeweils nächste letzte näher bezeichnete Sensor der Kette seine Daten nacheinander zu den von jedem vorherigen Sensor der Kette empfangenen Daten hinzufügt, wobei der erste näher bezeichnete Sensor der Kette schließlich die zusammengeführten Daten aller Sensoren der Kette weiter an die Datensammelvorrichtung überträgt.

2. Verfahren zum Sammeln von Daten nach Anspruch 1, wobei jeder Sensor so ausgelegt ist, dass er Daten von einem oder mehreren anderen ähnlichen Sensor(en) empfängt und mit seinen eigenen Daten zusammenführt und die zusammengeführten Daten weiter an einen anderen ähnlichen Sensor oder eine entfernte Datensammelvorrichtung überträgt.

3. Verfahren zum Sammeln von Daten nach Anspruch 1 oder 2, wobei jeder Sensor so ausgelegt ist, dass er die Betriebsfrequenz der Transceiverübertragungen nach Bedarf einstellt.

4. Verfahren zum Sammeln von Daten nach einem vorangehenden Anspruch, wobei der wenigstens eine Wandler ein Geophon (5) umfasst.

5. Verfahren zum Sammeln von Daten nach einem vorangehenden Anspruch, wobei der wenigstens eine oder ein weiterer Wandler ein Hydrophon (6) umfasst.

6. Verfahren zum Sammeln von Daten nach einem vorangehenden Anspruch, wobei jeder Sensor eine unabhängige Stromversorgung (3) umfasst.

7. Verfahren zum Sammeln von Daten nach Anspruch 6, wobei die unabhängige Stromversorgung eine wiederaufladbare Batterie und Mittel zum Wiederaufladen der Batterie vor Ort umfasst.

8. Verfahren zum Sammeln von Daten nach einem vorangehenden Anspruch, wobei der Transceiver unter Verwendung von Hochfrequenzsignalen, Signalen mit optischer Frequenz und/oder akustischen Signalen drahtlos kommuniziert.

9. Verfahren zum Sammeln von Daten nach einem vorangehenden Anspruch, wobei die entfernte Datensammelvorrichtung in einem ferngesteuerten Fahrzeug (ROV) oder einem autonomen Unterwasserfahrzeug (AUV) beweglich bereitgestellt ist.

10. Verfahren zum Sammeln von Daten nach einem vorangehenden Anspruch, das für wenigstens einen Sensor der Anordnung folgende Schritte umfasst:
Bestimmen der Position des wenigstens einen Sensors gegenüber zwei oder mehr anderen Sensoren der Anordnung durch Triangulation unter Verwendung drahtloser Signalübertragung zwischen den Sensoren; und
Übertragen der bestimmten Positionsdaten an die entfernte Datensammelvorrichtung.

11. Verfahren zum Sammeln von Daten nach einem vorangehenden Anspruch, das die Schritte des selektiven Sammelns der ein bestimmtes seismisches Ereignis betreffenden Daten von einer Untergruppe der Gesamtzahl von Sensoren der Anordnung umfasst.

## Revendications

1. Procédé de collecte de données à partir d'un réseau de capteurs sismiques sous-marins (1), chaque capteur sismique sous-marin comprenant :
au moins un transducteur (5 ou 6) réactif à des changements physiques suite à un événement sismique ;
un moyen (9) d'enregistrement de données à partir du ou de chaque transducteur ; et
un émetteur-récepteur (10) pour transmettre sans fil les données enregistrées du capteur à un dispositif de collecte de données à distance (15) en réponse à un signal de commande reçu en provenance d'une source externe, chaque capteur étant adapté pour communiquer sélectivement et sans fil avec un ou plusieurs capteurs similaires adjacents, et adapté pour déterminer sa position par rapport aux un ou plusieurs capteurs similaires adjacents, ou la position d'un autre capteur similaire par rapport à lui-même, à l'aide d'une communication sans fil entre lesdits capteurs,
**caractérisé en ce que** le procédé comprend :
l'envoi sans fil d'un signal d'invitation à émettre à partir du dispositif de collecte de données à distance ;
la réception d'une ou plusieurs réponses en provenance des capteurs adjacents dans le réseau ;
la désignation sélective de l'un des capteurs réactifs en tant que premier capteur dans une chaîne de communication de capteurs, ledit capteur réactif envoyant alors un signal d'invitation à émettre et recevant des réponses en provenance d'un ou plusieurs capteurs précédemment non désignés et désignant sélectivement l'un des capteurs réactifs précédemment non désignés en tant que capteur suivant dans la chaîne de communication et le capteur suivant répétant l'invitation à émettre et la désignation sélective pour un capteur suivant ultérieur dans la chaîne de communication et le processus se répétant jusqu'à ce que la chaîne de communication ait un nombre souhaité de capteurs ou jusqu'à ce qu'aucun capteur ne reste non désigné ;
l'envoi d'un signal de collecte de données du dispositif de collecte de données au premier capteur désigné pour commencer la collecte de données ;
la propagation du signal de collecte de données le long de la chaîne de communication du premier au dernier capteur désigné dans la chaîne ; et
le commencement de la transmission de données du dernier capteur désigné en remontant la chaîne de capteurs, chaque dernier capteur désigné suivant dans la chaîne ajoutant successivement ses données aux données reçues en provenance de chaque capteur précédent dans la chaîne, le premier capteur désigné dans la chaîne transmettant enfin les données accumulées en provenance de tous les capteurs dans la chaîne au dispositif de collecte de données.

2. Procédé de collecte de données selon la revendication 1, dans lequel chaque capteur est adapté pour recevoir et accumuler des données en provenance d'un ou plusieurs autres capteurs similaires avec ses propres données et pour retransmettre lesdites données accumulées à un autre capteur similaire ou dispositif de collecte de données à distance.

3. Procédé de collecte de données selon la revendication 1 ou 2, dans lequel chaque capteur est adapté pour régler la fréquence de fonctionnement des transmissions de l'émetteur-récepteur selon les besoins.

4. Procédé de collecte de données selon l'une quelconque des revendications précédentes, dans lequel le au moins un transducteur comprend un géophone (5).

5. Procédé de collecte de données selon l'une quelconque des revendications précédentes, dans lequel le au moins un transducteur ou un autre comprend un hydrophone (6).

6. Procédé de collecte de données selon l'une quelconque des revendications précédentes, dans lequel chaque capteur comprend un bloc d'alimentation autonome (3).

7. Procédé de collecte de données selon la revendication 6, dans lequel le bloc d'alimentation autonome incorpore une batterie rechargeable et un moyen pour recharger la batterie *in situ.*

8. Procédé de collecte de données selon l'une quelconque des revendications précédentes, dans lequel l'émetteur-récepteur communique sans fil à l'aide d'au moins un élément parmi une fréquence radio, une fréquence optique et des signaux acoustiques.

9. Procédé de collecte de données selon l'une quelconque des revendications précédentes, dans lequel le dispositif de collecte de données à distance est mobilisé dans un véhicule télécommandé (ROV) ou un véhicule sous-marin autonome (AUV).

10. Procédé de collecte de données selon l'une quelconque des revendications précédentes incluant, pour au moins un capteur dans le réseau, les étapes
de détermination de la position dudit au moins un capteur par rapport à deux autres capteurs ou plus dans le réseau par triangulation à l'aide d'une transmission de signal sans fil entre les capteurs ; et
de transmission des données de position déterminées au dispositif de collecte de données à distance.

11. Procédé de collecte de données selon l'une quelconque des revendications précédentes incluant les étapes de collecte sélective des données concernant un événement sismique particulier à partir d'un sous-ensemble du nombre total de capteurs dans le réseau.
